# EUROPÄISCHE PATENTSCHRIFT

(11) **EP 1 996 833 B1**
(45) Veröffentlichungstag und Bekanntmachung des Hinweises auf die Patenterteilung: **27.05.2009**
(21) Anmeldenummer: 07723181.9
(22) Anmeldetag: 12.03.2007
(51) Int. Cl.: F16H 1/08, B60T 13/02, B60T 13/74, B60T 11/04

(54) **KRAFTFAHRZEUG-FESTSTELLBREMSE MIT ELEKTROMOTORISCHEM AKTUATOR**
ELECTROMOTIVE ACTUATOR FOR A PARKING BRAKE
ACTIONNEUR À MOTEUR ÉLECTRIQUE POUR FREIN DE STATIONNEMENT

(30) Priorität: 14.03.2006 DE 102006011928
(43) Veröffentlichungstag der Anmeldung: 03.12.2008
(73) Patentinhaber: Oechsler Aktiengesellschaft, 91522 Ansbach (DE)
(72) Erfinder: DETTENBERGER, Stefan, 91522 Ansbach (DE); WOLF, Wilhelm, 91580 Petersaurach (DE)
(74) Vertreter: Führing, Dieter
(86) Internationale Anmeldenummer: PCT/EP2007/002132
(87) Internationale Veröffentlichungsnummer: WO 2007/104505

(56) Entgegenhaltungen:
- EP-A- 0 997 667
- WO-A-02/24397
- WO-A-20/04020875
- DE-A1- 10 349 078
- DE-C1- 19 748 318
- DE-U1- 20 107 326
- US-A- 3 973 449
- ROTH K: "EVOLVENTENVERZAHNUNGEN MIT EXTREMEN EIGENSCHAFTEN TEIL IIB: EVOLOIDVERZAHNUNGEN MIT RITZELZAEHNEZAHLEN VON Z2 = 3-8 FUER GROSSE UEBERSETZUNGEN INS SCHNELLE" ANTRIEBSTECHNIK, VEREINIGTE FACHVERLAGE, MAINZ, DE, Bd. 35, Nr. 9, 1. September 1996 (1996-09-01), Seiten 69-74, XP000622845 ISSN: 0722-8546

## Beschreibung

Die Erfindung betrifft eine Feststellbremse gemäß dem Oberbegriff des Anspruches 1.

Für deren Betätigung ist ein Aktuator mit elektromotorisch antreibbarem Getriebe ist ein möglichst stark untersetzendes Getriebe anzustreben, um kleinbauende hochtourige Elektromotoren mit entsprechend geringem Drehmoment einsetzen zu können. Dafür ist aus der DE 1 97 48 318 C1 ein zweistufiger Getriebezug bekannt, bei dem die erste Getriebestufe als Zahnriemen-Transmission zwischen dem Motor und einer zweiten Getriebestufe in Form eines extrem stark untersetzenden, selbsthemmend wirkenden Wellgetriebes oder Taumelradgetriebes zum entsprechend starken Heraufsetzen des Ausgangsdrehmomentes vor dem Aktuätorausgang vorgesehen ist. Jener Riementrieb stellt eine weiche Körperschallkopplung dar und bewirkt somit eine gewisse Entkopplung von den vom Motor ausgehenden Schwingungen. Vor allem aber wirkt der Riementrieb als dem eigentlichen Untersetzungs-Getriebe vorgeschaltete Drehzahl-Reduktionsstufe stark geräuschmindernd, weil die störende Geräuschentwicklung wesentlich von der Eingangsdrehzahl des ausgangsseitigen Getriebes abhängt. Von Vorteil ist der Riementrieb als vorgeschaltete Getriebestufe außerdem, weil hier Motor- und Getriebe-Achsen parallel zueinander angeordnet sein können, was einen insgesamt kompakten Aufbau erbringt.

Die Eingangsuntersetzung, die der Riementrieb zwischen dem Motor und dem eigentlichen, ausgangsseitigen starken Untersetzungs-Getriebe erbringt, ist allerdings aus konstruktiven Gründen beschränkt, vor allem hinsichtlich des minimal möglichen Durchmessers der von der Motor-Ausgangswelle getragenen kleineren der beiden Riemenscheiben. Das führt, wie sich gezeigt hat, in der Eingangsstufe des Untersetzungs-Getriebes immer noch zu einer Geräuschentwicklung, die jedenfalls bei einem PKW schon nur der gehobenen Ausstattungsklasse kaum noch akzeptiert wirt. Außerdem erbringt die Drehmomentensteigerung durch starke Drehzahl-Untersetzung eine extreme mechanische Beanspruchung und bedingt deshalb aufwendiger Sonderkonstruktionen unter Einsatz kostspieliger da höchst belastbarer Spritzguß-Kunststoffe für den Aktuator.

Gerade letzteres trifft auch auf die gattungsbildende, aus der DE 103 49 078 A1 bekannte elektromotorische Park- oder Feststellbremse zu. Dort soll ein ruhiger Lauf durch Einsatz der dafür allgemein bekannten Schrägvenahnungen, angewandt über alle aufeinanderfolgenden Stufen eines mehrstufigen Stirnradgetriebe, mit etwa gleichen Untersetzungsverhältnissen in den aufeinanderfolgenden Getriebestufen erzielt werden. Jene Lösung bedingt aber erhebliche konstruktive zusätzliche Maßnahmen, um die von den schrägen Verzahnungseingriffen hervorgerufenen, radial gegeneinander versetzten Axialkräfte in zugeordneten Lagergehäusen zuverlässig aufzunehmen. Und trotz der Schrägverzahnungen verbleibt eine gegenüber dem Riementrieb intensivere Köfperschallübertragung aufgrund der wechselseitigen Verzahnungseingriffe mit relativ geringer Untersetzung auch in der Eingangstufe.

In Erkenntnis der dieser Gegebenheiten liegt vorliegender Erfindung die technische Problemstellung zugrunde, eine Feststellbremse gattungsgemäßer Art anzugeben, die - selbst bei anzustrebendem noch kompakterem Aufbau ihres elektromotorischen Aktuators - zu einer kostengünstigeren Konstruktion mit vor allem viel ruhigerem Betrieb führt.

Diese Aufgabe ist erfindungsgemäß durch die Kombination der wesentlichen im Hauptanspruch angegebenen Merkmale gelöst. Darnach wird bei der Feststellbremse, auch im Interesse eines noch verringerten Achsabstandes zwischen den zueinander parallelem Motor- und Aktuator-Ausgangswellen, für die Drehmomentensteigerung eine extrem hohe Drehzahluntersetzung schon in der ersten Stufe direkt hinter dem Elektromotor vorgenommen. Das kann mit einem im Kunststoff-Spritzguß erstellten niedrigstufigen Stirnradgetriebe unter Einsatz der im Apparatebau als solchen bewährten Evolventenverzahnung vom Motor-Ritzel zu einem im Rahmen des verfügbaren Einbauraumes möglichst großen Zwischenrad vor dem Aktuator-Ausgang realisiert werden. Damit dieser erste Verzahnungseingriff der Getriebekette im Interesse der gewünschten, nur noch geringen Geräuschentwicklung die dafür erforderliche starke Drehzahl-Reduktion schon unmittelbar erbringt, ist das Motor-Ritzel mit extrem wenigen Zähnen ausgestattet, nämlich mit nur ein bis fünf Zähnen, und das damit kämmende Zwischenrad mit typisch etwa der demgegenüber wenigstens fünfzigfachen Zähnezahl. Die Ritzelzähne, die aufgrund ihrer extrem geringen Anzahl ein vergrößertes Zahnmodul ermöglichen, sind um den gleichmäßig geteilten Ritzel-Umfang gegeneinander versetzt; bei vorzugsweise nur zwei Ritzel-Zähnen stehen diese also einander diametral gegenüber.

Es würde der angestrebten Geräuschminderung allerdings zuwider laufen, wenn es motorabtriebsseitig wegen der extrem geringen Zähnezahl des Ritzels zu Eingriffsschlägen in die Stirnverzahnung des ihm folgenden Zwischenrades kommen würde. Deshalb ist in als solcher bekannter Weise dafür gesorgt, daß die Ritzel-Verzahnung trotz der extrem geringen Anzahl ihrer Zähne in keiner Drehstellung außer Eingriff mit der Stimverzahnung des Zwischenrades gerät. Das wird dadurch erreicht, daß jeder dieser wenigen Zähne im Prinzip als eine in axialer Richtung sich erstreckende radiale Längs-Rippe auf einer Zylinder-Außenmantelfläche ausgebildet ist; wobei die jeweilige Rippe sich aber in ihrem axialen Verlauf auf der Mantelfläche um wenigstens den Umfangswinkel der Umfangsteilung des Zylinderquerschnittes um die Ritzelachse herum windet, bei zwei Zähnen also um wenigstens den halben Ritzelumfang. Das Zwischenrad steht dann mit schräger Stirnverzahnung immer mit wenigstens einer der so gewunden verlaufenden Rippen, also mit wenigstens einem der vorzugsweise zwei Ritzel-Zähne, in lasttragendem Eingriff, wodurch akustisch störende und konstruktiv schädliche Schläge des Verzahnungseingriffes zuverlässig vermieden sind.

Diese etwa als gewundene Rippen ausgebildeten Zähne können auf einem als Ritzel dienenden Zylinder an der Motor-Ausgangswelle vorgesehen sein, diese kann aber auch unmittelbar mit solcher gewundenen Rippenstruktur ausgebildet sein. Entscheidend ist, daß es sich hier nicht etwa um einen Schneckentrieb (mit seinen zueinander orthogonalen Drehachsen), sondern um eine (parallelachsige) schräge Stirnverzahnung mit klassischer Evolventen-Geometrie der miteinander in Eingriff gelangenden Zahnquerschnitte handelt, wie sie etwa im Fachbuch MASCHINENELEMENTE (G. Niemann, H. Winter; Springer-Verlag 1985) in Abschnitt 22.5.3b von Band II, in der WO 2004/102,0875 A1 oder in der EP 0 997 67 A2 theoretisch abgehandelt ist; und wie sie bisher schon bei allerdings nur geringer mechanischer Beanspruchung etwa nach der US 3,973,449 zum Antrieb eines Scheibenwischerblattes bzw. nach der DE 2 01 07 326 U1 zum Verstellen einer Lüftungsklappe zum Einsatz kommt.

Das entsprechend schrägverzahnt mit dem Motorritzeöl in Eingreif stehende Rad ist gemäß einem weiteren Merkmal der Erfindung noch nicht selbst mit der Aktuator-Ausgangswelle versehen, sondern es treibt als Zwischenrad zu weiterer Drehzahlverringerung nun mit einem gerade stirnverzahnten Ritzel zunächst noch ein Abtriebsrad mit einer Untersetzung von typisch 2:1, das dann seinerseits erst einen profilierten Wellenstumpf als die Aktuator-Ausgangswelle trägt. In dieser zweiten Getriebestufe ist im Interesse geringer Axialbelastungen nun eine gerade Stirnverzahnung vorgesehen, was hinsichtlich der Geräuschentwicklung nun nicht mehr stört, weil die Getriebe-Eingangsdrehzahl hier schon maßgeblich herabgesetzt ist.

Im Interesse ungestörter Drehmomentenübertragung trotz kleinen Durchmessers bei Verwendung preiswerter da nicht-hochfester Spritzguß-Materialien ist die Ausgangswelle bei ihrem freien Stirnende nicht mit einer herkömmlichen Verzahnungsgeometrie und auch nicht mit einer Nut-Feder-Verbindung ausgestattet, sondern mit einem kleeblattförmigen Eingriffsquerschnitt bei oval verlaufenden Einbuchtungen für den Anschluß etwa eines Bremsmechanismus profiliert.

So bedarf es nun des konstruktiven Aufwandes und der zusätzlichen Einzelteile aus teuren hochfesten Materialien hinsichtlich axialer Beanspruchungen sowie des Einbauraumes für ein ausgangsseitiges starkes Untersetzungsgetriebe, nach Art insbesondere eines Wellgetriebes, eines Taumelradgetriebes oder eines mehrstufig kaskadierten Planetenradgetriebes für eine Untersetzung in der Größenordnung von 100:1, nicht mehr - solch ein zusätzlicher Geräuscherzeuger ist entfallen.

Auch beruht die erfindungsgemäße Lösung auf der Erkenntnis, daß die Körperschallentkopplung vom Motor mittels eines Riementriebes vor einem starken Untersetzungsgetriebe zum angestrebten ruhigen Betrieb wesentlich weniger beiträgt, als eine starke Drehzahlreduzierung möglichst unmittelbar hinter dem Aktuator-Motor, und damit unter Verzicht auf das ausgangsseitige zusätzliche mehrstufige Untersetzungsgetriebe.

Deshalb wird die Ausgangsdrehzahl des Aktuators zum elektromotorischen Betätigen der Park- oder Feststellbremse insbesondere in einem Personenkraftwagen erfindungsgemäß unmittelbar am Aktuator-Motor mittels einer einstufig so starken Drehzahluntersetzung herabgesetzt, daß sich gleich hier schon eine geräuschunkritische Drehzahl einstellt; wofür motorausgangsseitig ein Einzahn- bis Fünfzahn-Ritzel vorgesehen ist. Das bleibt, trotz dieser extrem geringen Zähnezahl, aufgrund gewunden rippenförmigen Verlaufes der Zähne ständig mit der schrägen Stirnverzahnung eines dazu achsparallelen Zwischenrades in Eingriff, welches seinerseits vorzugsweise mit einem stirnverzahnten Ritzel über ein Abtriebsrad auf die Aktuator-Ausgangswelle zur Abgabe des Drehmomentes für die Betätigung eines Bremsmechanismus einwirkt.

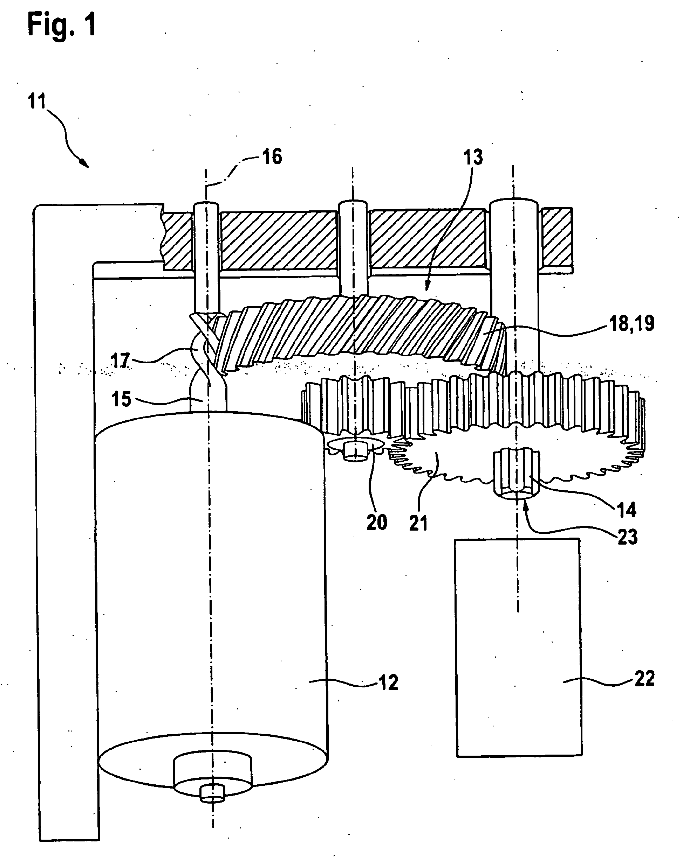

Zur näheren Erläuterung der erfindungsgemäßen Lösung wird nachstehend ein in der Zeichnung skizziertes bevorzugtes Ausführungsbeispiel beschrieben. Die einzige Figur der Zeichnung zeigt etwa maßstabsgerecht in Schrägansicht die Baugruppe eines elektromtitorischen Aktuators zum Betätigen eines Fahrzeug-Bremsmechanismus.

Der kleinbauende elektromechanische Aktuator 11 weist einen Antriebs-Motor 12 mit nachgeschaltetem drehzahluntersetzendem Stimrad-Getriebe 13 vor einer Aktuator-Ausgangswelle 14 auf. Unmittelbar die Motorwelle 15 ist als Ritzel mit nur extrem wenigen (hier: zwei) Zähnen in Form von (hier: beide einander diametral gegenüber) um die Achse 16 sich windenden Längsrippen 17 ausgebildet. Die greifen in die Schrägverzahnung 18 eines Zwischenrades 19 für eine Untersetzung in der Größenordnung von wenigstens 50:1 ein. Dessen geradverzahntes Ritzel 20 kämmt für eine zusätzliche Drehzahluntersetzung 2:1 mit einem ebenfalls geradverzahnten Abtriebsrad 21. Ein von ihm koaxial hervorragender Wellenstupf ist zur Ausgangswelle 14 profiliert, um ihn drehfest an den Bremsmechanismus 22 ankoppeln zu können. Dafür weist die Ausgangswelle 14, im Interesse großer Drehmomentenbelastbarkeit trotz geringen Querschnittes, einen etwa kleeblattförmigen Eingriffsquerschnitt 23 mit oval verlaufenden Einbuchtungen auf.

### Bezugszeichenliste

- 11: Aktuator (mit 12 und 13)
- 12: Motor
- 13: Getriebe (zwischen 12 und 14)
- 14: Ausgangswelle (von 11/13 an 21)
- 15: Motorwelle (von 12)
- 16: Achse (von 15)
- 17: Längsrippen (auf 16)
- 18: Schrägverzahnung (von 19, in 17)
- 19: Zwischenrad (mit 18)
- 20: Ritzel (von 19)
- 21: Abtriebsrad (hinter 20)
- 22: Bremsmechanismus (hinter 11)
- 23: Eingriffsquerschnitt (von 14 für 22)

## Patentansprüche

1. Kraftfahrzeug-Feststellbremse mit elektromotorischem Aktuator (11) mit Motor (12) und ihm nachgeschaltetem, schrägverzahntem Getriebe (13) vor einer Aktuator-Ausgangswelle (14), **dadurch gekennzeichnet, daß** das Getriebe (13) ein Zwischenrad (19) mit einer Schrägverzahnung (18) aufweist, die mit einem Motor-Ritzel mit nur ein bis fünf Zähnen in Eingriff steht, welche nach Art von Längsrippen (17), gegeneinander in gleichmäßiger Umfangs-Teilung über die Zylindermantelfläche versetzt und jede Längsrippe (17) sich wenigstens um den Umfangswinkel entsprechend einer dieser Teilungen winden um die RitzelAchse (16) gewunden verlaufen, wobei das Zwischenrad (19) seinerseits mit einem Ritzel (20) ausgestattet ist, welches in stimverzahntem Eingriff zu einem Abtriebsrad (21) steht, das die Aktuator-Ausgangswelle (14) aufweist.

2. Feststellbremse nach Anspruch 1, **dadurch gekennzeichnet, daß** die Längsrippen (17) auf der Ausgangswelle (15) des Motors (12) ausgebildet sind.

3. Feststellbremse nach Anspruch 1, **dadurch gekennzeichnet, daß** die Längsrippen (17) auf einem Zylinder an der Ausgangswelle (15) des Motors (12) vorgesehen sind.

4. Feststellbremse nach einem der vorangehenden Ansprüche, **dadurch gekennzeichnet, daß** nur zwei gewunden verlaufende Längsrippen (17) einander diametral gegenüber vorgesehen sind.

5. Feststellbremse nach einem der vorangehenden Ansprüche, **dadurch gekennzeichnet, daß** die Schrägverzahnung 18) des Zwischenrades (19) und die Längsrippen (17) Evolventen-Querschnittsgeometrien aufweisen.

6. Feststellbremse nach einem der vorangehenden Ansprüche, **dadurch gekennzeichnet, daß** die Aktuator-Ausgangswelle (14) beim freien Stirnende mit einem Eingriffsquerschnitt (23) ausgestattet ist, der kleeblattähnlich mit oval verlaufenden Einbuchtungen profiliert ist.

## Claims

1. Motor vehicle parking brake having an electromotive actuator (11) with a motor (12) and helically toothed gear mechanism (13) which is arranged downstream of the latter and is upstream of an actuator output shaft (14), **characterized in that** the gear mechanism (13) has an intermediate gear (19) with helical toothing (18) which is in engagement with a motor pinion with only one to five teeth which extend wound around the pinion axis (16) offset with respect to one another with uniform circumferential pitch over the lateral surface of the cylinder, with each longitudinal rib (17) winding in accordance with one of these pitches at least by the circumferential angle, wherein the intermediate gear (19) itself is equipped with a pinion (20) which is in spur-toothed engagement with an output gear (21) which has the actuator output shaft (14).

2. Parking brake as claimed in Claim 1, **characterized in that** the longitudinal ribs (17) are formed on the output shaft (15) of the motor (12).

3. Parking brake as claimed in Claim 1, **characterized in that** the longitudinal ribs (17) are provided on a cylinder on the output shaft (15) of the motor (12).

4. Parking brake as claimed in one of the preceding claims, **characterized in that** only two longitudinal ribs (17) which extend in a wound fashion are provided diametrically opposite one another.

5. Parking brake as claimed in one of the preceding claims, **characterized in that** the helical toothing (18) of the intermediate gear (19) and the longitudinal ribs (17) have evolvent cross-sectional geometries.

6. Parking brake as claimed in one of the preceding claims, **characterized in that** the actuator output shaft (14) is equipped, at the free spur end, with an engagement cross section (23) which has a clover-leaf-like profile with indents which extend in an oval shape.

## Revendications

1. Frein de stationnement de véhicule automobile avec un actionneur (11) à moteur électrique, comprenant un moteur (12) et une transmission (13) à denture oblique montée après le moteur, avant un arbre de sortie (14) de l'actionneur, **caractérisé en ce que** la transmission (13) présente une roue intermédiaire (19) avec une denture oblique (18), qui est en prise avec un pignon de moteur ayant seulement une à cinq dents, qui, à la manière de nervures longitudinales (17), s'étendent en s'enroulant autour de l'axe d'un pignon (16) de manière décalée de divisions équidistantes les unes des autres sur la surface d'enveloppe du cylindre, chaque nervure longitudinale (17) s'enroulant au moins autour de l'angle périphérique correspondant à l'une de ces divisions, la roue intermédiaire (19) étant pour sa part pourvue d'un pignon (20) qui est en prise par une denture frontale avec une roue de sortie (21) qui présente l'arbre de sortie (14) de l'actionneur.

2. Frein de stationnement selon la revendication 1, **caractérisé en ce que** les nervures longitudinales (17) sont réalisées sur l'arbre de sortie (15) du moteur (12).

3. Frein de stationnement selon la revendication 1, **caractérisé en ce que** les nervures longitudinales (17) sont prévues sur un cylindre sur l'arbre de sortie (15) du moteur (12).

4. Frein de stationnement selon l'une quelconque des revendications précédentes, **caractérisé en ce que** seulement deux nervures longitudinales (17) s'étendant en s'enroulant sont diamétralement opposées.

5. Frein de stationnement selon l'une quelconque des revendications précédentes, **caractérisé en ce que** la denture oblique (18) de la roue intermédiaire (19) et les nervures longitudinales (17) présentent des géométries en section transversale en forme de développantes.

6. Frein de stationnement selon l'une quelconque des revendications précédentes, **caractérisé en ce que** l'arbre de sortie (14) de l'actionneur est pourvu d'une section transversale d'engagement (23), au niveau de l'extrémité frontale libre, qui est profilée en forme de feuille de trèfle, avec des renfoncements s'étendant suivant des formes ovales.
